# EUROPÄISCHE PATENTANMELDUNG

(11) **EP 3 537 384 A2**
(43) Veröffentlichungstag der Anmeldung: **11.09.2019**
(21) Anmeldenummer: 19156463.2
(22) Anmeldetag: 11.02.2019
(51) Int. Cl.: G06T 15/04, G06T 15/20

(54) **VISUELLES SURROUND-VIEW-SYSTEM ZUR ÜBERWACHUNG DES FAHRZEUGINNEREN**

(30) Priorität: 07.03.2018 DE 102018203405
(71) Anmelder: ZF Friedrichshafen AG, 88046 Friedrichshafen (DE)
(72) Erfinder: Abhau, Jochen, 6900 Bregenz (AT); Vieweger, Wolfgang, 88085 Langenargen (DE)

(57) **Zusammenfassung**

Vorrichtung, umfassend eine Recheneinheit (3), die dazu ausgelegt ist, wenigstens ein Kamerabild (Img1-Img8) wenigstens einer Kamera (Cam1-Cam8) auf eine virtuelle Projektionsoberfläche (Proj) zu projizieren, um eine virtuelle Ansicht (ImgV) des Fahrzeuginnenraums (2) zu erstellen.

## Beschreibung

### TECHNISCHES GEBIET

Die vorliegende Offenbarung bezieht sich auf das Gebiet der Fahrerassistenzsysteme, insbesondere auf ein Überwachungssystem für Fahrzeuginnenräume.

### TECHNISCHER HINTERGRUND

Fahrerassistenzsysteme sind elektronische Einrichtungen für Kraftfahrzeuge, die den Fahrer im Hinblick auf Sicherheitsaspekte und Steigerung des Fahrkomforts unterstützen sollen.

Zu den Fahrerassistenzsystemen gehören beispielsweise die sogenannten Aufmerksamkeitsassistenten (auch "Fahrerzustandserkennung" oder "Müdigkeitserkennung"). Solche Aufmerksamkeitsassistenten umfassen Sensorsysteme zur Überwachung des Fahrers, die beispielsweise die Bewegungen und die Augen des Fahrers verfolgen und so Müdigkeit oder Abgelenktheit feststellen und gegebenenfalls eine Warnung ausgeben.

Ferner sind auch Fahrerassistenzsysteme bekannt, die den Fahrzeuginnenraum überwachen. Damit die für die Fahrt verantwortliche Person den Zustand des Fahrzeuginnenraums überblicken kann, sind bei derartigen Systemen ein oder mehrere Kameras vorgesehen, welche den Innenraum überwachen. Ein System zur Überwachung eines Fahrzeuginnenraums, das auf Infrarotstrahlung basiert, ist beispielsweise aus der deutschen Offenlegungsschrift DE 4 406 906 A1 bekannt.

Zudem sind auch Park- und Rangierassistenten zum Erfassen der näheren Umgebung des Fahrzeugs bekannt. Park- und Rangierassistenten umfassen in der Regel eine Rückfahrkamera. Moderne Park- und Rangierassistenten, auch Surround-View-Systeme genannt, umfassen neben einer Rückfahrkamera noch weitere Weitwinkelkameras, z.B. an der Front und an den Fahrzeugseiten. Solche Surround-View-Systeme erzeugen ein Bild aus der Vogelperspektive, also von oben auf das Fahrzeug. Ein solches Surround-View-System ist beispielsweise aus der europäischen Patentanmeldung EP 2 511 137 A1 bekannt.

Wenn mehrere Kameras aus mehreren Blickwinkeln den Außenraum des Fahrzeugs überblicken, und jedes einzelne Kamerabild einzeln und unverarbeitet dargestellt wird, führt das dazu, dass die Information für den Fahrer unübersichtlich und schwer zu erfassen ist. Die deutsche Patentschrift DE 10 2015 205 507 B3 offenbart diesbezüglich ein Rundsichtsystem für ein Fahrzeug mit einer Auswertungseinheit zum Verarbeiten von Bildern, die von mehreren Außenkameras aufgenommenen werden. Die Auswertungseinheit erzeugt aus den aufgenommenen Bildern ein Draufsichtbild durch Berechnen einer Projektion der aufgenommenen Bilder auf eine virtuelle Projektionsoberfläche und durch Berechnen einer Draufsicht der Projektion auf die virtuelle Projektionsoberfläche.

Aufgabe der vorliegenden Erfindung ist es, ein Fahrerassistenzsystem bereitzustellen, das die Sicherheit im Fahrzeug noch weiter erhöht.

Diese Aufgabe wird durch die erfindungsgemäße Vorrichtung nach Anspruch 1, das erfindungsgemäße Überwachungssystem nach Anspruch 9 und das erfindungsgemäße Verfahren nach Anspruch 10 gelöst. Weitere vorteilhafte Ausgestaltungen der Erfindung ergeben sich aus den Unteransprüchen und der folgenden Beschreibung bevorzugter Ausführungsbeispiele der vorliegenden Erfindung.

Gemäß den unten beschriebenen Ausführungsbeispielen wird eine Vorrichtung bereitgestellt, die eine Recheneinheit umfasst, die dazu ausgelegt ist, wenigstens ein Kamerabild wenigstens einer Kamera auf eine virtuelle Projektionsoberfläche zu projizieren, um eine virtuelle Ansicht des Fahrzeuginnenraums zu erstellen.

Bei den ein oder mehreren Kameras kann es sich beispielsweise um Grauwert- oder Farbbild-Kameras, Stereokameras oder Time-of-Flight-Kameras handeln. Vorzugsweise sind die Kameras in Weitwinkeloptik ausgelegt. Die Kameras können beispielsweise derart angeordnet werden, dass jede Stelle im Fahrzeuginneren im Blickfeld mindestens einer Kamera ist. Dabei können typische Sitzpositionen der Fahrgäste bei der Montage der Kameras berücksichtigt werden, so dass keine oder möglichst wenige Verdeckungen durch Personen entstehen. Die Kamerabilder bestehen beispielsweise aus einer Vielzahl von Pixeln, die jeweils einen Grauwert, einen Farbwert, oder ggf. eine Tiefeninformation definieren.

Bei dem Fahrzeuginnenraum kann es sich beispielsweise um das gesamte Fahrzeuginnere oder Teile des Fahrzeuginneren eines Kraftfahrzeugs handeln, oder aber um einen Fahrzeuginnenraum wie beispielsweise den Ladebereich eines Transporters, oder den Wohnbereich eines Wohnmobils. Der Innenraum von größeren Fahrzeugen wie Transportern, Campern, SUVs sowie auch von normalen PKWs ist häufig sehr unübersichtlich und nicht auf einen Blick überschaubar, wegen Beifahrern, herumliegender Ladung, Taschen, etc. Während der Fahrt ist der Innenraum für den Fahrer ebenso nicht überschaubar, da er die vor ihm liegende Straße beobachten muss, und nicht nach hinten blicken kann. Zudem kann sich beispielweise der Anschnallzustand eines Kindes auf dem Kindersitz auch während der Fahrt ändern, daher ist es nicht ausreichend, wenn der Fahrer bzw. der für die Fahrt Verantwortliche (bei einem autonomen Fahrzeug) den Innenraum bei Fahrtantritt einmalig überprüft. Bei einem autonomen Fahrzeug, wie auch bei größeren Fahrzeugen wie z.B. Campingfahrzeugen ist es auch möglich, dass Ladung bzw. schwerere Objekte von Beifahrern während der Fahrt bewegt werden. Dies führt dazu, dass während der Fahrt Risiken auftreten können durch nicht korrekt angeschnallte Personen, oder nicht ordnungsgemäß gesicherte Ladungsteile.

Die mittels der vorliegenden Erfindung erzeugte virtuelle Ansicht bzw. das virtuelle Abbild des Fahrzeuginnenraums kann von der Recheneinheit beispielsweise an ein Anzeigegerät gesendet werden und dort zur Anzeige gebracht werden. Bei dem Anzeigegerät kann es sich beispielsweise um ein Display handeln, das sich derart innerhalb des Fahrzeugs befindet, dass es für einen Fahrer sichtbar ist. Das auf dem Display angezeigte virtuelle Abbild des Fahrzeuginnenraums kann beispielsweise dem Fahrer helfen, zu prüfen, ob alle Insassen ihre Sitzposition eingenommen haben und angeschnallt sind und ob sich gefährliche Objekte im Fahrzeuginnenraum befinden.

Der Vorteil einer virtuellen Darstellung des Innenraums auf diese Art und Weise besteht darin, dass die virtuelle Kamera an einer beliebigen Stelle, z.B. auch außerhalb des Fahrzeugs, oder an schlecht zugänglichen Stellen innerhalb des Fahrzeugs, platziert werden kann und somit ein besonders übersichtliches Abbild des Innenraums für den Fahrer generiert werden kann. Durch eine weit oberhalb des Fahrzeugs platzierte virtuelle Kamera kann beispielsweise eine Draufsicht auf den Fahrzeuginnenraum erzeugt werden, wie sie von einer langbrennweitigen Kamera erzeugt werden würde, die oberhalb des Fahrzeuginnenraums positioniert ist, d.h. unter Vermeidung von Verzerrungseffekten, wie sie bei Weitwinkelaufnahmen mit Kameras entstehen, die nahe an dem abzubildenden Objekt positioniert sind. Auf diese Weise kann beispielsweise eine virtuelle Ansicht des Fahrzeuginnenraums aus der Vogelperspektive gewonnen werden, was für den Fahrer eine übersichtliche Darstellung des Fahrzeuginnenraums liefert. Auf einen Blick ist beispielsweise ein potentiell gefährliches Objekt auf einem Tisch erkennbar, oder ein Kind auf dem Rücksitz, das sich von seinem Sitz abgeschnallt hat. Ferner werden mit diesem Verfahren die Bilder mehrerer Kameras zu einem virtuellen Bild verrechnet, was die Übersichtlichkeit für den Nutzer erhöht.

Das virtuelle Bild des Fahrzeuginnenraums für die Anzeige auf dem Anzeigegerät wird gemäß den unten beschriebenen Ausführungsbeispielen erzeugt, indem ein oder mehrere Kamerabilder jeweiliger Kameras auf eine virtuelle Projektionsoberfläche projiziert werden.

Die Projektionsoberfläche kann beispielsweise ein Modell des Fahrzeuginnenraums sein, insbesondere eine Oberfläche, die aus ein oder mehreren Flächen wie Rechtecken oder Polygonen, oder auch aus gekrümmten Flächen, wie Kugeln, Halbkugeln oder dergleichen zusammengesetzt ist und so einen Fahrzeuginnenraum modelliert. Das Modell des Fahrzeuginnenraums dient als Projektionsoberfläche für die Kamerabilddaten. Bei der Projektionsoberfläche muss es sich nicht notwendigerweise um eine Ebene handeln. Bei der Projektionsoberfläche kann es sich vielmehr beispielsweise um eine 2D-Oberfläche handeln, die im dreidimensionalen Raum eingebettet ist. Rechtecke oder Polygone, oder gekrümmte Flächen, welche die 2D-Oberfläche bilden, können beispielsweise unter bestimmten Winkeln zueinander angeordnet sein, so dass die 2D-Oberfläche einen Fahrzeuginnenraum modelliert. Die Flächen, welche die Projektionsoberfläche bilden, können miteinander verbunden sein, so dass sich eine einheitliche Projektionsoberfläche ergibt. Alternativ kann die Projektionsoberfläche aber auch aus voneinander separierten Teilprojektionsoberflächen bestehen, die jeweils aus ein oder mehreren Projektionsflächen zusammengesetzt sind.

Das Projizieren des wenigstens einen Kamerabildes kann beispielsweise mittels virtueller optischer Abbildungsverfahren erfolgen, beispielsweise indem optische Strahlen durch jeweilige Pixel des Kamerabildes mit der Projektionsoberfläche geschnitten werden. Durch das Projizieren eines oder mehrerer Kamerabilder wird beispielsweise ein 3D-Modell des Fahrzeuginnenraums mit aktuellen Kameradaten versehen, so dass das 3D-Modell mit aktueller Textur und Farbinformation versehen wird.

Bei der Recheneinheit kann es sich beispielsweise um einen Prozessor oder dergleichen handeln. Die Recheneinheit kann beispielsweise die Recheneinheit eines Bordcomputers eines Kraftfahrzeugs sein und neben der Erzeugung einer virtuellen Ansicht des Fahrzeuginnenraums auch noch andere Funktionen im Kraftfahrzeug übernehmen. Die Recheneinheit kann aber auch eine Komponente sein, die dediziert für die Erzeugung einer virtuellen Ansicht des Fahrzeuginnenraums vorgesehen ist.

Gemäß einer bevorzugten Ausführungsform ist die Recheneinheit dazu ausgelegt, ein virtuelles Abbild des auf die virtuelle Projektionsoberfläche projizierten Kamerabildes zu erzeugen. Eine virtuelle Ansicht des Fahrzeuginnenraums kann beispielsweise mittels virtueller optischer Techniken aus den auf die Projektionsoberfläche projizierten Kamerabildern rekonstruiert werden. Das virtuelle Abbild kann beispielsweise erzeugt werden, indem die auf die Projektionsoberfläche projizierten Kamerabilder von einer virtuellen Kamera "abfotografiert" werden. Dieses virtuelle Abfotografieren kann wiederum mittels optischer Abbildungsverfahren erfolgen, beispielsweise indem optische Strahlen durch jeweilige Pixel des virtuellen Kamerabildes mit der Projektionsoberfläche geschnitten werden. So kann die Recheneinheit beispielsweise dazu ausgelegt sein, auf Grundlage der Kamerabilder eine modellierte 3D-Szene des Fahrzeuginnenraums von einer virtuellen Kamera (oder einem virtuellen Beobachter) "abzufilmen". Dazu kann sowohl die Position als auch die Richtung dieser Kamera gewählt werden. Beispielsweise kann eine virtuelle Position mittig oberhalb des Fahrzeugs mit geradewegs nach unten gerichteter virtueller Kamera gewählt werden, oder auch eine virtuelle Position etwas von der Seite mit einer Schrägausrichtung. Es ist auch möglich, dass der Nutzer des Systems die Position und Richtung der virtuellen Kamera selbst beeinflussen kann, z.B über ein Touch-Display.

Die Recheneinheit kann auch dazu ausgelegt sein, mehrere Kamerabilder von jeweiligen Kameras auf die virtuelle Projektionsoberfläche zu projizieren, um daraus eine zusammengesetzte virtuelle Ansicht zu erstellen. Dies kann beispielsweise erfolgen, indem die mehreren Kamerabilder mittels dem Fachmann bekannten "Stitching"-Techniken zu einem zusammengesetzten Kamerabild zusammengefügt werden, das dann auf die virtuelle Projektionsoberfläche projiziert wird. "Stitching"-Techniken können beispielsweise Alpha-Blending umfassen, was bedeutet, dass Pixelwerte zu gewissen Anteilen aus den beteiligten Kamerabildern genommen werden. Alternativ können auch die Kamerabilder einzeln auf die virtuelle Projektionsoberfläche projiziert werden und diese einzelnen Projektionen der Kamerabilder können dann beispielsweise mittels "Stitching"-Techniken zu einem zusammengesetzten Projektionsbild zusammengefügt werden, das dann von der virtuellen Kamera "abfotografiert" wird. Alternativ können die Kamerabilder einzeln projiziert und "abfotografiert" werden, um dann die erhaltenen virtuellen Kamerabilder mittels beispielsweise "Stitching"-Techniken zu einem zusammengesetzten virtuellen Kamerabild zusammenzusetzen.

Die virtuelle Projektionsoberfläche kann aus einem Modell des Fahrzeuginnenraums abgeleitet sein, insbesondere aus einem 3D-Modell des Fahrzeuginnenraums. Das Modell des Fahrzeuginnenraums kann beispielsweise statische und temporäre Komponenten des Fahrzeuginnenraums umfassen. So kann beispielsweise zur Laufzeit der Recheneinheit aus den durch die Kameras aufgenommenen Bildern ein aktuelles 3D-Modell der statischen (d.h. Sitze, evtl. Tische, etc.) und bewegten bzw. temporären Komponenten (Fahrgäste, Beladung etc.) erzeugt werden. Das 3D-Modell des Fahrzeuginnenraums kann beispielsweise eine Sammlung dreidimensionaler Koordinaten von Pixeln, Flächen, oder anderer geometrischer Formen umfassen.

Die Recheneinheit kann ferner dazu ausgelegt sein, gemeinsame Merkmale eines Objekts in mehreren Kamerabildern zu erkennen, um ein 3D-Modell des Fahrzeuginnenraums zu erzeugen. Das Erkennen gemeinsamer Merkmale eines Objekts kann beispielsweise durch Korrelieren von Kamerabildern miteinander erfolgen. Bei einem gemeinsamen Merkmal kann es sich beispielsweise um ein korreliertes Pixel oder korellierte Pixelgruppen handeln, oder um bestimmte strukturelle oder farbliche Muster in den Kamerabildern. Beispielsweise können Kamerabilder miteinander korreliert werden, um übereinstimmende Pixel oder Merkmale zu identifizieren, wobei der Fachmann auf ihm bekannte geeignete Bildkorrelierungsverfahren zurückgreifen kann, beispielsweise auf Verfahren, wie sie von Olivier Faugeras et al. im Research Report "Real-time correlation-based stereo: algorithm, implementations and applications", RR-2013, INRIA 1993 beschrieben sind. Es können beispielsweise zwei Kamerabilder miteinander korelliert werden. Um die Rekonstruktionsgenauigkeit zu erhöhen, können jedoch auch mehr als zwei Kamerabilder miteinander korreliert werden.

Die Recheneinheit kann dazu ausgelegt sein, das Modell des Fahrzeuginnenraums mittels stereoskopischer Techniken aus aktuellen Kamerabildern zu rekonstruieren. So kann das Erzeugen eines 3D-Modells ein Rekonstruieren der dreidimensionalen Position eines Objekts, beispielsweise eines Pixels oder Merkmals, mittels stereoskopischer Techniken umfassen. Das auf diese Weise gewonnene 3D-Modell des Fahrzeuginnenraums kann beispielsweise als Sammlung der dreidimensionalen Koordinaten aller im Korrelationsprozess identifizierter Pixel sein. Zusätzlich kann diese Sammlung an dreidimensionalen Punkten auch durch Flächen genähert werden, um ein 3D-Modell mit Oberflächen zu erhalten.

Die Recheneinheit kann ferner dazu ausgelegt sein, das Modell des Fahrzeuginnenraums unter Berücksichtigung von Tiefeninformationen zu erzeugen, die von wenigstens einer der Kameras bereitgestellt werden. Solche Tiefeninformationen werden beispielsweise von stereoskopischen Kameras oder Time-of-Flight-Kameras bereitgestellt. Solche Kameras liefern für einzelne Pixel Tiefeninformationen, die zusammen mit den Pixelkoordinaten herangezogen werden können, um das Modell zu erzeugen.

Das Modell des Fahrzeuginnenraums, aus dem die Projektionsoberfläche abgeleitet wird, kann beispielsweise ein vordefiniertes Referenzmodell des Fahrzeuginnenraums sein.

Die Recheneinheit kann dazu ausgelegt sein, solch ein vordefinierten Referenzmodell des Fahrzeuginnenraums mit einem mittels stereoskopischer Techniken aus aktuellen Kamerabildern erhalten Modell des Fahrzeuginnenraums zusammenzuführen. Die Recheneinheit kann beispielsweise dazu ausgelegt sein, wenigstens Teile des Modells des Fahrzeuginnenraums unter Berücksichtigung des Referenzmodells zu erstellen. Beispielsweise kann die Recheneinheit statische bzw. permanente Komponenten des 3D-Modells durch Detektion gemeinsamer Merkmale eines Objekts in mehreren Bildern unter Berücksichtigung eines bereits vorhandenen 3D-Referenzmodells des statischen bzw. permanenten Fahrzeuginnenraums erstellen. Beispielsweise kann eine Sammlung an dreidimensionalen Koordinaten von in einem Korrelationsprozess identifizierten Pixel oder anderen Merkmalen mit einem bereits existierenden 3D-Referenzmodell des Fahrzeuginnenraums verglichen werden, um auf diese Weise Übereinstimmungen und Abweichungen der aktuellen Objekte im Fahrzeuginnenraum vom 3D-Referenzmodell zu ermitteln.

Ein Referenzmodell des Fahrzeuginnenraums umfasst beispielsweise statische Komponenten des Fahrzeuginnenraums, wie Gegenstände, die permanent im Fahrzeuginnenraum vorhanden sind. Das 3D-Referenzmodell kann beispielsweise Sitze, Tische, Innenraumwände, Armaturen oder dergleichen umfassen. Vorzugsweise berücksichtigt das Referenzmodell des Fahrzeuginnenraums auch Drehungen, Verschiebungen oder Verkippungen der Sitze und sonstigen statischen Inneneinrichtung des Fahrzeugs.

So kann beispielsweise aus den Abweichungen der aus den Kamerabildern ermittelten dreidimensionalen Koordinaten eines Sitzes eine Verschiebung des Fahrzeugsitzes aus seiner Referenzposition erkannt werden, oder ggf. auch eine Verstellung der Rückenlehne aus ihrer Referenzposition.

Das Referenzmodell kann beispielsweise in der Recheneinheit hinterlegt sein. So kann zur Aufbereitung und Verarbeitung der einzelnen Kamerabilder zu einem den ganzen Innenraum erfassenden Übersichtsbild ein Referenzmodell des (permanenten) Fahrzeuginnenraums ohne Beladung und Insassen in einem Speicher wie RAM-, ROM-, Flash-, SSD-, oder Festplattenspeicher der Recheneinheit hinterlegt werden.

Das Referenzmodell kann beispielsweise in einer Kalibrierungsphase eines Innenraumüberwachungssystems vorab aus Kamerabildern der Innenraumkameras erzeugt werden. Alternativ kann das Referenzmodell auch 3D-Daten bezüglich des Fahrzeuginnenraums umfassen, die vom Fahrzeughersteller bereitgestellt werden und in der Recheneinheit vorab hinterlegt werden. Dabei kann es sich beispielsweise um konstruktive Details eines Fahrzeugtyps handeln, die aus dem Herstellungsprozess bekannt sind, wie Gittermodelle von Innenraumkomponenten wie Sitzen und Armaturen, oder Gittermodelle von Fahrzeugwänden, Scheiben. Das 3D-Referenzmodell kann auch Farben und Texturen von Flächen definieren, um eine möglichst realistische Modellierung des Fahrzeuginnenraums zu ermöglichen.

Die unten detaillierter beschriebenen Ausführungsbeispiele offenbaren auch ein Überwachungssystem für einen Fahrzeuginnenraum, umfassend ein oder mehrere Kameras, sowie eine Vorrichtung, wie sie oben beschrieben wurde, die dazu ausgelegt ist, auf Grundlage eines oder mehrerer Kamerabilder der Kameras eine virtuelle Ansicht des Fahrzeuginnenraums zu erstellen. Das Innenraumüberwachungssystem kann ferner ein Kommunikationssystem umfassen, über welches die Recheneinheit Daten beispielsweise von den Innenraumkameras empfängt und Daten, beispielsweise das erzeugte virtuelle Abbild des Fahrzeuginnenraum, an ein Anzeigegerät sendet. Bei dem Kommunikationssystem kann es sich beispielsweise um einen CAN-Bus eines Kraftfahrzeugs handeln.

Die unten detaillierter beschriebenen Ausführungsbeispiele betreffen auch ein Verfahren, umfassend ein Projizieren wenigstens eines Kamerabildes wenigstens einer Kamera auf eine virtuelle Projektionsoberfläche, um eine virtuelle Ansicht des Fahrzeuginnenraums zu erstellen. Das Verfahren kann sämtliche Prozesse umfassen, die oben in Zusammenhang mit einer Recheneinheit bzw. einem Überwachungssystem für einen Fahrzeuginnenraum beschrieben wurden.

Die hier beschriebenen Verfahren können auch als Computerprogramm ausgeführt werden. Somit betreffen die Ausführungsbeispiele auch ein Computerprogramm, das Instruktionen umfasst, die, wenn sie auf einem Prozessor ausgeführt werden, wenigstens ein Kamerabild wenigstens einer Kamera auf eine virtuelle Projektionsoberfläche projizieren, um eine virtuelle Ansicht des Fahrzeuginnenraums zu erstellen. Das Computerprogramm kann sämtliche Prozesse umfassen, die oben in Zusammenhang mit einer Recheneinheit bzw. einem Überwachungssystem für einen Fahrzeuginnenraum beschrieben wurden. Das Computerprogramm kann beispielsweise auf einem Speichermedium gespeichert werden.

Ausführungsformen werden nun beispielhaft und unter Bezugnahme auf die beigefügten Zeichnungen beschreiben, in denen:
Fig. 1 eine schematische Draufsicht auf ein Fahrzeug zeigt, das mit einem Innenraumüberwachungssystem ausgestattet ist;
Fig. 2 ein Blockdiagramm des Innenraumüberwachungssystems zeigt;
Fig. 3 ein schematisches Beispiel für eine virtuelle Projektionsoberfläche zeigt;
Fig. 4 einen beispielhaften Prozess des Projizierens eines Kamerabildes auf eine virtuelle Projektionsoberfläche zeigt;
Fig. 5a ein Flussdiagramm eines Prozesses zur Erzeugung eines Modells des Fahrzeuginnenraums aus mehreren Kamerabildern des Fahrzeuginnenraums zeigt;
Fig. 5b ein Flussdiagramm eines alternativen Prozesses zur Erzeugung eines Modells des Fahrzeuginnenraums aus mehreren Kamerabildern des Fahrzeuginnenraums zeigt;
Fig. 6 beispielhaft einen Prozess des Korrelierens zweier Kamerabilder zeigt, um übereinstimmende Pixel zu identifizieren;
Fig. 7 einen beispielhaften Prozess des Rekonstruierens der dreidimensionalen Position eines Pixels mittels stereoskopischer Techniken zeigt;
Fig. 8 ein schematisches Beispiel für den Vergleich einer Sammlung an dreidimensionalen Koordinaten von im Korrelationsprozess identifizierten Pixeln mit einem 3D-Referenzmodell zeigt;
Fig. 9 zeigt, wie mittels einer virtuellen Kamera ein Abbild eines 3D-Modells des Fahrzeuginnenraums gewonnen werden kann; und
Fig. 10 ein Beispiel für eine virtuelle Ansicht des Fahrzeuginnenraums aus der Vogelperspektive zeigt.

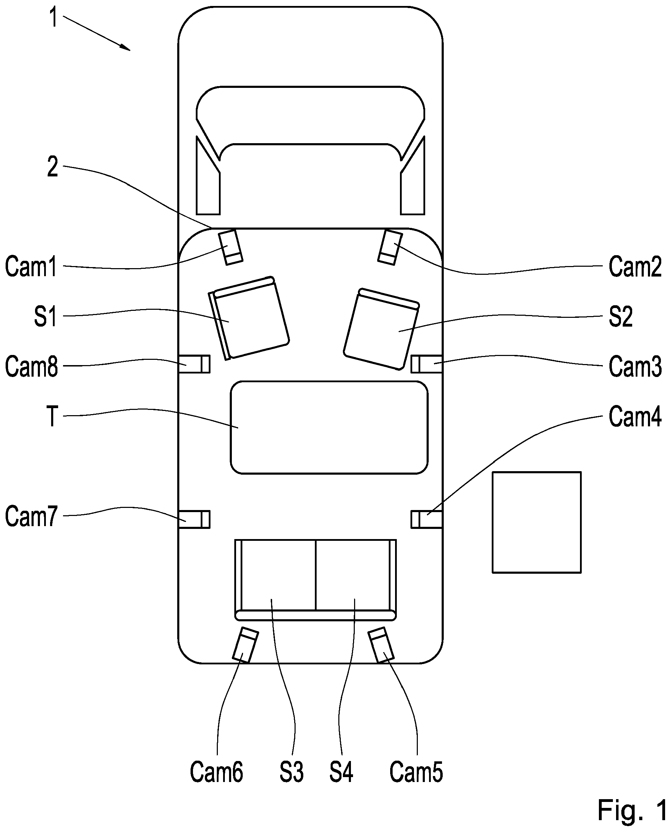

Fig. 1 zeigt eine schematische Draufsicht auf ein Fahrzeug 1, hier beispielhaft ein Wohnmobil, das mit einem Innenraumüberwachungssystem ausgestattet ist. Das Innenraumüberwachungssystem umfasst eine beispielhafte Anordnung von Innenraumkameras Cam1-Cam8. Zwei Innenraumkameras Cam1, Cam2 befinden sich an der Vorderseite des Fahrzeuginnenraums 2, zwei Innenraumkameras Cam3, Cam4 befinden sich auf der rechten Seite des Fahrzeuginnenraums 2, zwei Innenraumkameras Cam5, Cam6 befinden sich auf der Rückseite und zwei Innenraumkameras Cam7, Cam8 befinden sich auf der linken Seite des Fahrzeuginnenraums 2. Jede Innenraumkamera Cam1-Cam8 erfasst einen Teil des Fahrzeuginnenraums 2 des Fahrzeugs 1. Die beispielhafte Ausstattung des Fahrzeugs 1 mit Innenraumkameras ist so ausgelegt, dass die Innenraumkameras Cam1-Cam8 auch nach Zustieg von Personen den kompletten Fahrzeuginnenraum im Sichtbereich haben. Zur permanenten Innenausstattung des Fahrzeuginnenraums gehören fernen vier Sitze S1-4 und ein Tisch T. Bei den Kameras Cam1-Cam8 kann es sich beispielsweise um Grauwert- oder Farbbildkameras in Weitwinkeloptik handeln.

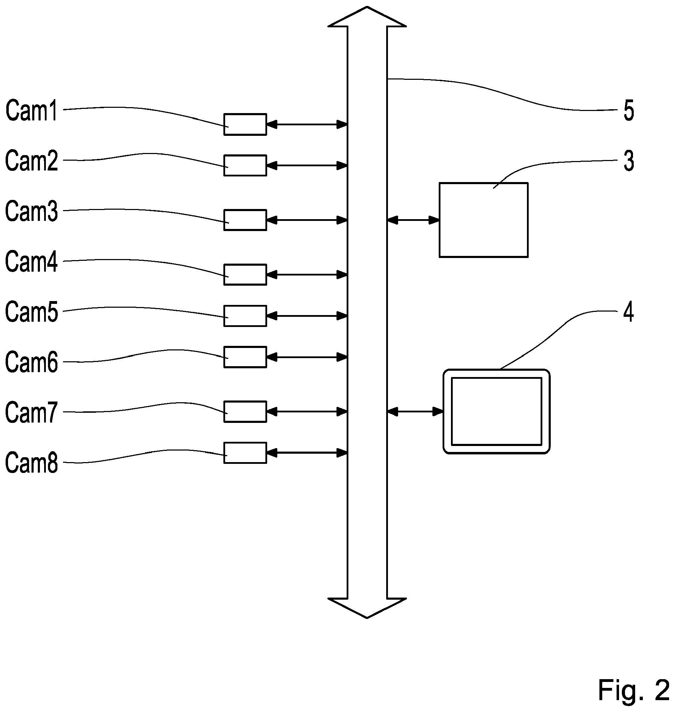

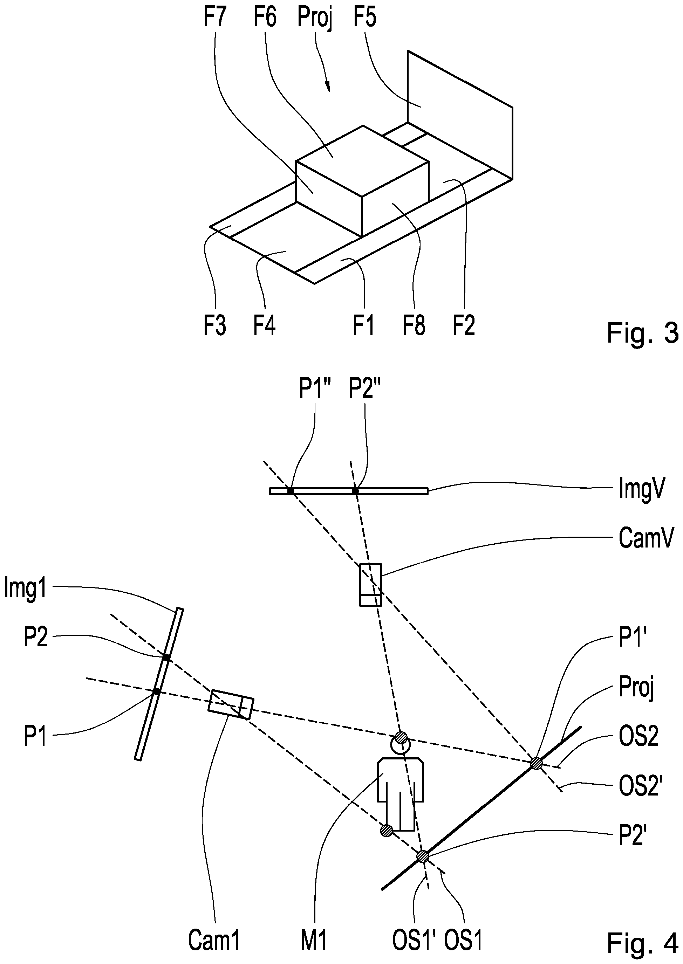

Fig. 2 zeigt ein Blockdiagramm, das das Innenraumüberwachungssystem auf schematische Weise darstellt. Zusätzlich zu den Kameras Cam1-Cam8 umfasst das Innenraumüberwachungssystem eine Recheneinheit 3 und ein Display 4.
Die durch die verschiedenen Kameras Cam1-Cam8 erfassten Bilder werden über ein Kommunikationssystem 5 (z.B. einen CAN-Bus) zur Recheneinheit 3 zur Verarbeitung in der Recheneinheit 3 transferiert. Die Recheneinheit 3 ist konfiguriert zum Korrelieren von Kamerabildern, um ein 3D-Modell des Innenraums zu erzeugen, wie dies in den Fig. 3, 4 und 5 gezeigt und unten ausführlicher beschrieben ist. Die Recheneinheit 3 berechnet dann eine Draufsicht des Fahrzeuginnenraums 2. Das berechnete Draufsichtsbild wird dann durch das Display 4 angezeigt, das sich derart innerhalb des Fahrzeugs 1 befindet, dass es für einen Fahrer sichtbar ist. Das Fahrzeug 1 kann beispielsweise ein Wohnmobil sein. Die auf dem Display 4 angezeigte Draufsicht kann dem Fahrer helfen, zu prüfen, ob alle Insassen ihre Sitzposition eingenommen haben und angeschnallt sind, und ob sich gefährliche Objekte im Fahrzeuginnenraum befinden.

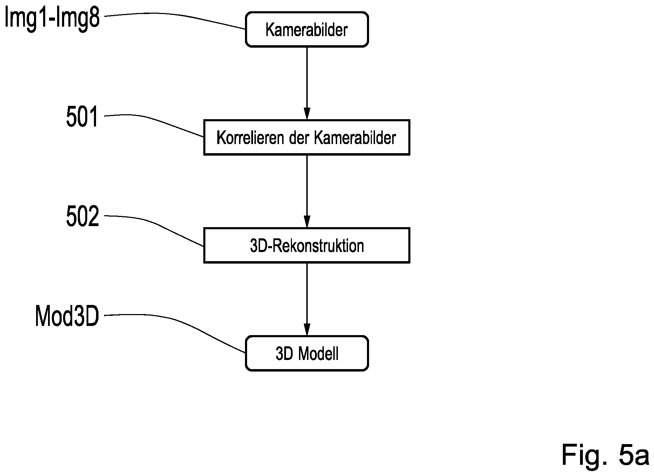

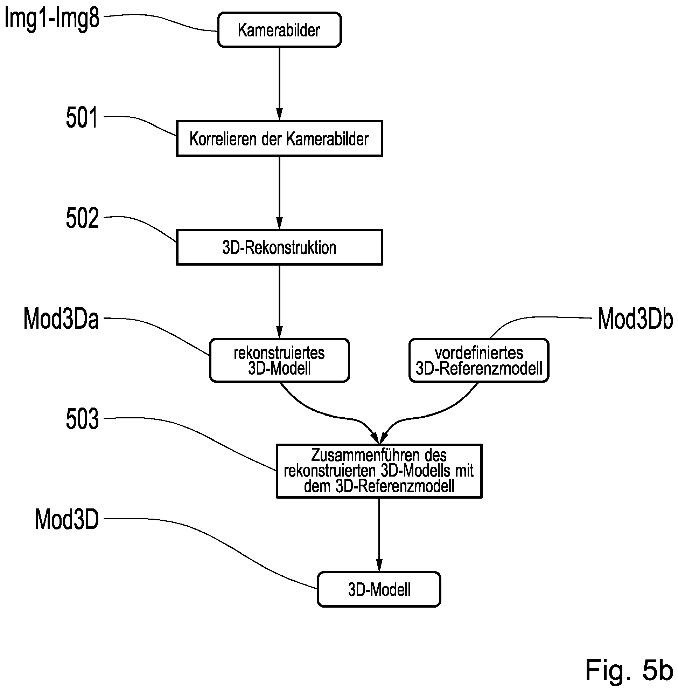

Fig. 3 zeigt ein schematisches Beispiel für eine virtuelle Projektionsoberfläche, die aus einem 3D-Modell des Fahrzeuginnenraums abgeleitet ist. Die Projektionsoberfläche umfasst Flächen F1, F2, F3, F4 eines 3D-Modells des Fahrzeuginnenraums, die einen Boden des Fahrzeuginnenraums repräsentieren. Ferner umfasst die Projektionsoberfläche eine Fläche F5 eines 3D-Modells des Fahrzeuginnenraums, die eine Seitenwand des Fahrzeuginnenraums repräsentiert, sowie Flächen F6, F7, F8 eines 3D-Modells des Fahrzeuginnenraums, die einen Tisch im Fahrzeuginnenraum repräsentieren. Die Projektionsoberfläche Proj bzw. das Modell des Fahrzeuginnenraums ist in Fig. 3 nur ausschnittsweise gezeigt. Die Flächen F1 bis F8 bilden zusammen eine (zweidimensionale) Projektionsoberfläche Proj des Fahrzeuginnenraums, die als virtuelle Projektionsoberfläche für Kamerabilder dienen kann, wie dies in Fig. 4 näher beschrieben ist. Solch eine (zweidimensionale) Projektionsoberfläche des Fahrzeuginnenraums kann beispielsweise manuell definiert werden und in einem Speicher der Recheneinheit als Referenzmodell hinterlegt werden. Alternativ kann solch eine 2D-Projektionsoberfläche auch aus einem 3D-CAD-Modell des Fahrzeuginnenraums abgeleitet oder errechnet werden, wie es aus einem Konstruktionsprozess des Fahrzeugs bekannt ist. Alternativ kann eine Projektionsoberfläche des Fahrzeuginnenraums auch durch stereoskopische Verfahren erlangt werden, wie dies in Zusammenhang mit den Fig. 5a, 5b, 6, und 7 unten näher beschrieben ist. Beispielsweise kann mittels stereoskopischer Verfahren eine Sammlung von 3D-Punkten ermittelt werden, welche eine 2D-Oberfläche des Fahrzeuginnenraums repräsentieren, wie dies beispielsweise in dem bereits genannten Fachartikel von Olivier Faugeras et al. im Research Report "Real-time correlation-based stereo: algorithm, implementations and applications", RR-2013, INRIA 1993 gezeigt ist. Insbesondere kann die Projektionsoberfläche Proj auch aus einem zusammengesetzten Modell abgeleitet werden, das durch Zusammenfügen eines vordefinierten Referenzmodells mit einem aktuell rekonstruierten Modell erzeugt wird, wie dies in Fig. 5b unten näher beschrieben ist.

Fig. 4 zeigt einen beispielhaften Prozess des Projizierens eines Kamerabildes Img1 auf eine virtuelle Projektionsoberfläche Proj. Bei der virtuellen Projektionsoberfläche Proj kann es sich beispielsweise um eine oder mehrere der in Fig. 3 gezeigten Flächen F1 bis F8 handeln. Die Projektionsoberfläche Proj stellt ein Modell des Fahrzeuginnenraums dar, das eine zweidimensionale Oberfläche definiert, die in einen dreidimensionalen Raum eingebettet ist und noch keine Textur oder Farbinformation enthält. Aus der bekannten Position und Ausrichtung der Kamera Cam1, sowie der ebenfalls bekannten Position und Lage der Bildebene des Kamerabildes Img1 wird für jedes Pixel P1, P2 des Kamerabildes Img1 ein entsprechender optischer Strahl OS1 bzw. OS2 berechnet. Die Pixel P1 bzw. P2 entsprechen beispielsweise dem Abbild eines Insassen M1 im Fahrzeuginnenraum, das durch die Kamera Cam1 erzeugt wird. Der Schnittpunkt der beiden optischen Strahlen OS1 und OS2 mit der virtuellen Projektionsoberfläche Proj liefert Projektionen P1' und P2' der Pixel P1 und P2. Durch diese Projektion des Kamerabilds entsteht ein Modell des Fahrzeuginnenraums, das eine zweidimensionale Oberfläche definiert, die Textur oder Farbinformation enthält. Durch Berechnung der optischen Strahlen OS1' und OS2' durch diese Projektionen P1' bzw. P2' bezüglich einer virtuellen Kamera CamV können virtuelle Abbilder P1" und P2" der Punkte P1 und P2 in einer virtuellen Bildebene ImgV der virtuellen Kamera CamV ermittelt werden. Indem dieser Prozess für alle Pixel des Kamerabildes Img1 durchgeführt wird, kann ein virtuelles Abbild ImgV des von der Kamera Cam1 erfassten Teils des Fahrzeuginnenraums auf der virtuellen Projektionsoberfläche Proj aus der Perspektive der virtuellen Kamera CamV erzeugt werden.

Der in Fig. 4 gezeigte Prozess kann für sämtliche Flächen des Fahrzeuginnenraummodells (z.B. F1 bis F8 in Fig. 3) durchgeführt werden, um eine Projektion des Kamerabildes Img1 auf die 2D-Oberfläche des Fahrzeuginnenraums zu erzeugen. Die virtuelle Bildebene ImgV und die virtuelle Kamera CamV sind Hilfsmittel zur Berechnung einer Ansicht auf die Szene, wie sie in der Realität nur von einem weit über dem Fahrzeug platzierten Beobachterplatz möglich ist.

Der in Fig. 4 gezeigte Prozess kann ferner für Kamerabilder mehrerer oder aller Innenraumkameras (z.B. Cam1 bis Cam8 in Fig. 1 und Fig. 2) durchgeführt werden, um ein möglichst vollständiges Abbild des Fahrzeuginnenraums zu erhalten. Falls mehrere Kameras verwendet werden, die beispielsweise auf verschiedenen Seiten des Fahrzeugs positioniert sind, wie in Fig. 1 gezeigt, werden mehrere Kamerabilder zur gleichen Zeit aufgezeichnet, was zu mehreren berechneten Bildern gemäß dem durch die virtuelle Kamera ImgV dargestellten virtuellen Beobachter führt. Deshalb ist die Recheneinheit 3 weiterhin konfiguriert zum Zusammensetzen der mehreren berechneten Bilder zu einem einzelnen, flüssig zusammengesetzten Draufsichtsbild, das dann auf dem Display 4 angezeigt wird. Alternativ ist es möglich, dass die Recheneinheit 3 dazu ausgelegt ist, mittels Techniken, die dem Fachmann als "Stitching" bekannt sind, mehrere Bilder zu einem einzelnen zusammengesetzten Bild zusammenzusetzten. Auf der Basis des einzelnen zusammengesetzten Bildes können dann die Projektion auf die virtuelle Projektionsoberfläche, sowie die Draufsicht berechnet werden. Eine weitere Alternative ist, dass die Recheneinheit 3 dazu ausgelegt ist, mittels "Stitching"-Techniken mehrere Projektionsbilder, die aus den erfassten Bildern resultieren, auf der virtuellen Projektionsoberfläche zu einem einzelnen Projektionsbild zusammenzusetzen und dann eine Draufsicht auf der Basis dieses einzelnen Projektionsbilds zu berechnen.

Fig. 5a zeigt ein Flussdiagramm eines Prozesses zur Erzeugung eines Modells des Fahrzeuginnenraums aus mehreren Kamerabildern des Fahrzeuginnenraums. Der Prozess kann beispielsweise in der Recheneinheit (3 in Fig. 2) ausgeführt werden. In einem Schritt 501, werden Kamerabilder Img1-Img8, die von den Innenraumkameras (Cam1 bis 8 in Fig. 1 und 2) aufgenommen wurden miteinander korreliert, um übereinstimmende Pixel in den Kamerabildern Img1-Img8 zu identifizieren. In einem Schritt 502 wird aus der in Schritt 501 gewonnen Information über übereinstimmende Pixel ein 3D-Modell Mod3D des Fahrzeuginnenraums rekonstruiert.

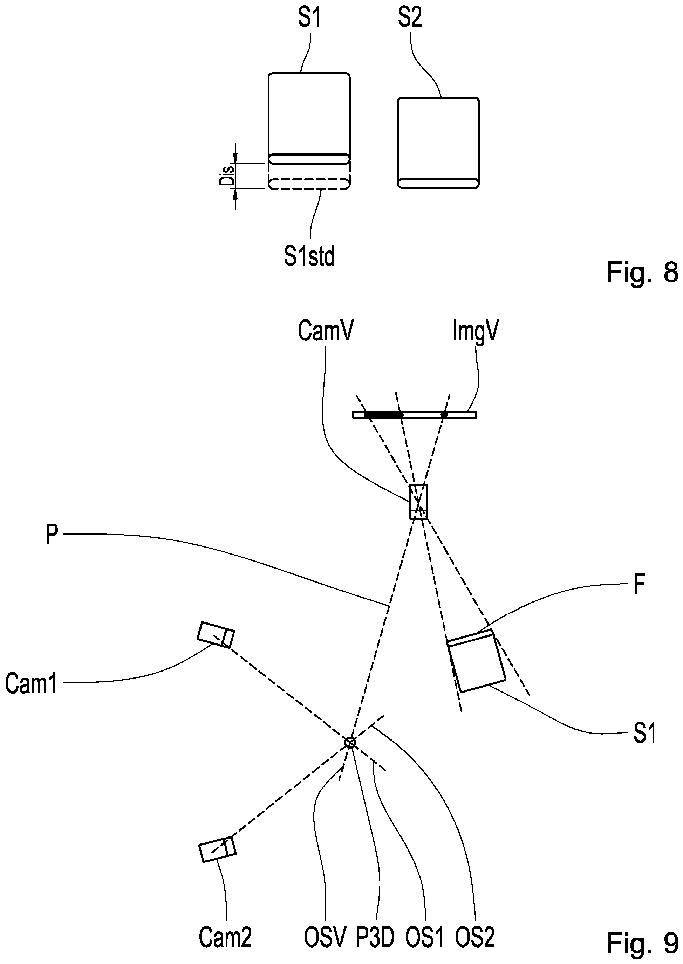

Fig. 5b zeigt ein Flussdiagramm eines alternativen Prozesses zur Erzeugung eines Modells des Fahrzeuginnenraums aus mehreren Kamerabildern des Fahrzeuginnenraums, sowie aus einem bereits vorhandenem Modell des Fahrzeuginnenraums. Der Prozess kann beispielsweise in der Recheneinheit (3 in Fig. 2) ausgeführt werden. In einem Schritt 501, werden Kamerabilder Img1-Img8, die von den Innenraumkameras (Cam1-8 in Fig. 1 und 2) aufgenommen wurden miteinander korreliert, um übereinstimmende Pixel in den Kamerabildern Img1-Img8 zu identifizieren. In einem Schritt 502 wird aus der in Schritt 501 gewonnen Information über übereinstimmende Pixel ein 3D-Modell Mod3Da des Fahrzeuginnenraums rekonstruiert. In Schritt 503 wird das rekonstruierte Modell Mod3Da mit einem vordefinierten 3D-Referenzmodell Mod3Db des Fahrzeuginnenraums (z.B. mit einem aus dem Konstruktionsprozess des Fahrzeugs stammenden 3D-CAD-Modell) zusammengeführt, um ein endgültiges 3D-Modell Mod3D des Fahrzeuginnenraums zu erzeugen. Das Zusammenführen des rekonstruierten Modells mit dem Referenzmodell kann beispielsweise ein Erkennen von Objekten umfassen, die bezüglich dem Referenzmodell verschoben sind, wie dies in Fig. 8 unten näher erläutert ist. Zusätzlich oder alternativ kann das Zusammenführen des rekonstruierten Modells mit dem Referenzmodell auch ein Erkennen von zusätzlichen Gegenständen umfassen, die im Referenzmodell nicht enthalten sind, wie beispielsweise Beladung oder Insassen im Fahrzeuginnenraum. Durch das Zusammenführen des 3D-Referenzmodells mit dem rekonstruierten Modell kann ein besseres Modell erhalten werden, da sowohl Referenzdaten als auch aktuelle Daten über Flächen bzw. Objekte im Fahrzeuginnenraum berücksichtigt werden können.

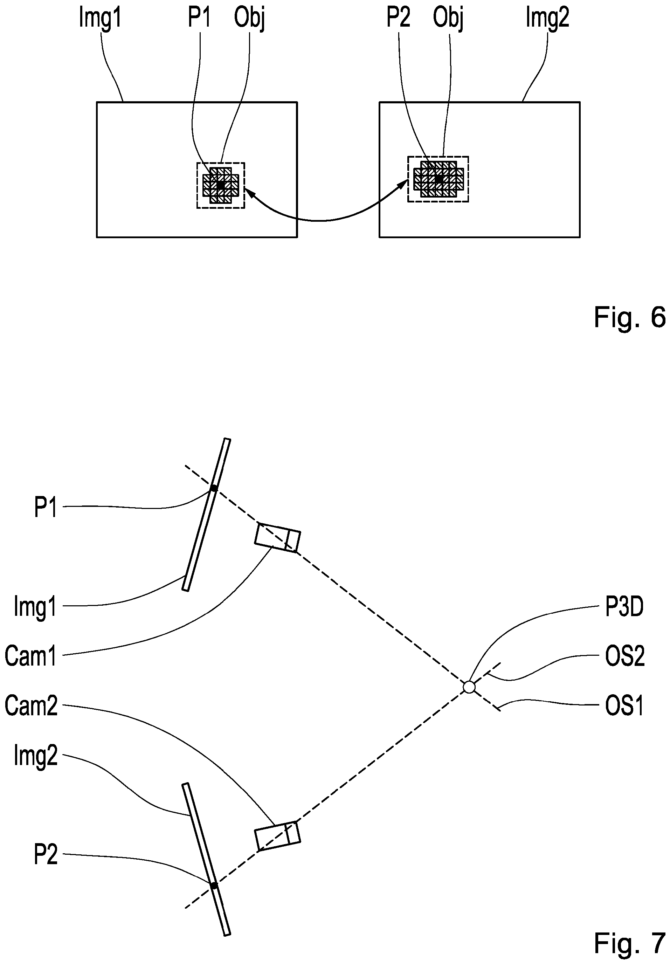

Fig. 6 zeigt beispielhaft einen Prozess des Korrelierens zweier Kamerabilder, um übereinstimmende Pixel zu identifizieren. Zwei Innenraumkameras, deren Position und Ausrichtung im Raum bekannt ist, liefern ein erstes Kamerabild Img1 und ein zweites Kamerabild Img2. Es könnte sich beispielsweise um Bilder Img1 und Img2 der beiden Innenraumkameras Cam1 und Cam2 aus Fig. 1 handeln. Position und Ausrichtung der beiden Kameras unterscheiden sich, so dass die beiden Bilder Img1 und Img2 ein beispielhaftes Objekt Obj aus zwei verschiedenen Perspektiven liefern. Jedes der Kamerabilder Img1 und Img2 besteht gemäß Auflösung und Farbtiefe der Kamera aus einzelnen Pixeln. Die beiden Kamerabilder Img1 und Img2 werden miteinander korreliert, um übereinstimmende Pixel zu identifizieren, wobei der Fachmann auf ihm bekannte geeignete Bildkorrelierungsverfahren zurückgreifen kann, wie sie oben bereits genannt wurden. Im Korrelationsprozess wird erkannt, dass ein Objekt Obj sowohl im Bild Img1 als auch im Bild Img2 abgebildet ist und dass beispielsweise Pixel P1 in Bild Img1 mit Pixel P2 in Bild Img2 übereinstimmt. Die Position des Objekts Obj in Bild Img1 unterscheidet sich aufgrund der unterschiedlichen Kamerapositionen und -ausrichtungen von der Position des Objekts Obj in Bild Img2. Ebenso unterscheidet sich auch die Gestalt des Abbilds des Objekts Obj im zweiten Kamerabild aufgrund der Perspektivenänderung von der Gestalt des Abbilds des Objekts Obj im ersten Kamerabild. Aus den unterschiedlichen Positionen beispielsweise des Pixels P1 in Bild Img1 im Vergleich zu Pixel P2 in Bild Img2 kann mittels stereoskopischer Techniken (vgl. Fig. 7 und die Beschreibung unten) auf die Position des Pixels im dreidimensionalen Raum rückgeschlossen werden. Der Korrelationsprozess liefert auf diese Weise die Positionen einer Vielzahl von Pixeln von Objekten im Fahrzeuginnenraum, aus denen ein 3D-Modell des Fahrzeuginnenraums konstruiert werden kann.

Fig. 7 zeigt einen beispielhaften Prozess des Rekonstruierens der dreidimensionalen Position eines Pixels mittels stereoskopischer Techniken. Aus den bekannten Positionen und Ausrichtungen der beiden Kameras Cam1 und Cam2, sowie der ebenfalls bekannten Position und Lage der Bildebenen der Kamerabilder Img1 und Img2 wird für jedes Pixel P1, P2 ein entsprechender optischer Strahl OS1 bzw. OS2 berechnet. Der Schnittpunkt der beiden optischen Strahlen OS1 und OS2 liefert die dreidimensionale Position P3D des Pixels, das als Pixel P1 und P2 in den beiden Kamerabildern Img1 und Img2 abgebildet ist. Im obigen Beispiel der Fig. 7 werden exemplarisch zwei Kamerabilder ausgewertet, um die dreidimensionale Position zweier korrelierter Pixel zu ermitteln. Auf diese Weise könnten beispielsweise die Bilder von einzelnen Kamerapaaren Cam1/Cam2, Cam3/Cam4, Cam5/Cam6 oder Cam7/Cam8 miteinander korreliert werden, um das 3D-Modell zu erzeugen. Um die Rekonstruktionsgenauigkeit zu erhöhen, können jedoch auch mehrere Kamerabilder miteinander korreliert werden. Wenn beispielsweise drei oder mehr Kamerabilder miteinander korreliert werden sollen, dann kann beispielsweise ein erstes Kamerabild als Referenzbild ausgewählt werden, bezüglich dem für jedes weitere Kamerabild eine Disparitätskarte berechnet wird. Die so erhaltenen Disparitätskarten werden dann vereinigt, indem beispielsweise jeweils die Übereinstimmung mit dem besten Korrelationsergebnis ausgewählt wird.

Das auf diese Weise gewonnene Modell des Fahrzeuginnenraums kann beispielsweise als Sammlung der dreidimensionalen Koordinaten aller im Korrelationsprozess identifizierten Pixel konstruiert werden. Zusätzlich kann diese Sammlung an dreidimensionalen Punkten auch durch Flächen genähert werden, um ein Modell mit Oberflächen zu erhalten. Auch könnte die Sammlung an dreidimensionalen Koordinaten aller im Korrelationsprozess identifizierten Pixel mit einem bereits existierenden Referenzmodell des Fahrzeuginnenraums verglichen werden, um auf diese Weise Übereinstimmungen und Abweichungen der aktuellen Objekte im Fahrzeuginnenraum vom Referenzmodell zu ermitteln.

Fig. 8 zeigt ein Beispiel, bei dem durch Vergleich der Sammlung an dreidimensionalen Koordinaten von im Korrelationsprozess identifizierten Pixel mit dem Referenzmodell zwei im Referenzmodell definierte Fahrzeugsitze S1 und S2 identifizieren worden sind. Aus den Abweichungen der aus den Kamerabildern ermittelten dreidimensionalen Koordinaten S1 des ersten Sitzes kann eine Verschiebung Dis des Fahrzeugsitzes S1 aus seiner Standardposition S1sdt erkannt werden. Auf dieselbe Weise könnte ggf. auch eine Verstellung der Rückenlehne der Sitze S1 und S2 aus ihrer Standardneigung erkannt werden.

Fig. 9 zeigt, wie mittels einer virtuellen Kamera CamV ein Abbild eines Modells des Fahrzeuginnenraums gewonnen werden kann. Das Abbild kann beispielsweise dem Fahrer zur Anzeige gebracht werden, so dass dieser die Sicherheitslage im Fahrzeuginnenraum leicht überblicken kann. Wie in Fig. 7 beschrieben ist, wurde mittels stereoskopischer Techniken aus zwei Bildern, die von zwei Kameras Cam1 und Cam2 aufgenommen wurden, eine dreidimensionale Position P3D eines Punktes eines Objekts im Fahrzeuginnenraum rekonstruiert. Auf diesen Punkt wird die Farbinformation des Kamerapixels projiziert. Durch Berechnung des optischen Strahls durch diesen Punkt und die virtuelle Kamera CamV kann ein virtuelles Abbild P des Punktes P3D in einer virtuellen Bildebene ImgV der virtuellen Kamera CamV ermittelt werden. Die virtuelle Bildebene ImgV und die virtuelle Kamera CamV sind Hilfsmittel zur Berechnung einer Ansicht auf die Szene ("abfotografieren"), wie sie in der Realität nur von einem weit über dem Fahrzeug platzierten Beobachterplatz möglich ist. Indem dieser Prozess für alle im Korrelationsprozess identifizierten Pixel durchgeführt wird, kann ein virtuelles Abbild ImgV des Modells des Fahrzeuginnenraums mit darauf projizierten Farbinformationen der realen Kameras aus der Perspektive der virtuellen Kamera CamV erzeugt werden. Wie in Fig. 9 ebenfalls gezeigt ist, kann auf entsprechende Weise auch eine aus der Sammlung dreidimensionaler Punkte abgeschätzte Fläche F eines im Modell erkannten Sitzes S1 auf die Bildebene ImgV von der virtuellen Kamera CamV abfotografiert werden. Der Sitz S1 und der rekonstruierte Punkt P3D stellen hier beispielhaft einen Teil eines 3D-Modells bzw. einer Projektionsoberfläche dar, auf welche Textur und Farbinformationen der physikalischen Kameras projiziert werden. Auf diese Weise kann beispielsweise eine virtuelle Ansicht des Fahrzeuginnenraums aus der Vogelperspektive gewonnen werden, die für den Fahrer eine übersichtliche Darstellung des Fahrzeuginnenraums liefert.

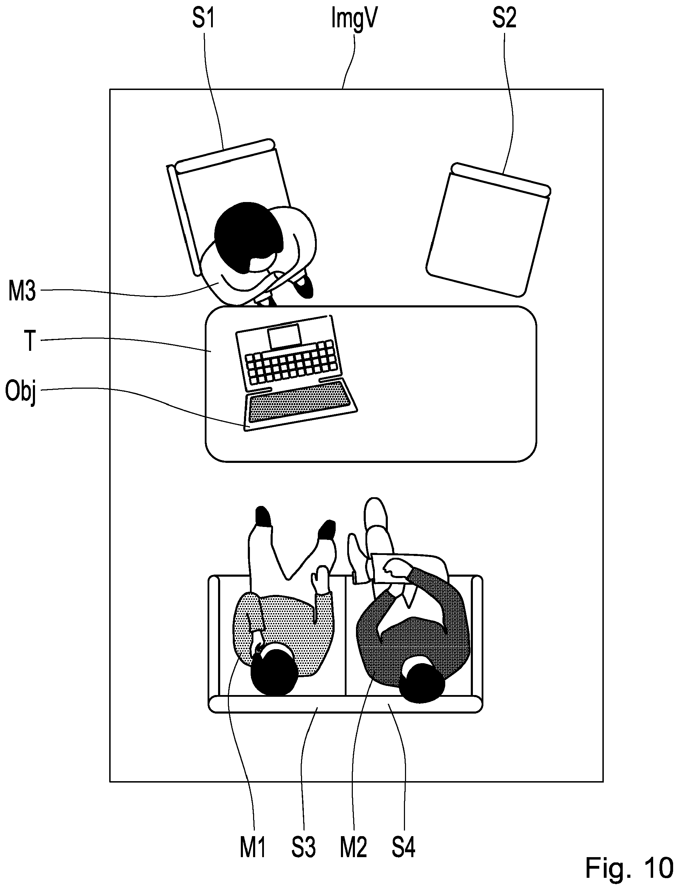

Fig. 10 zeigt ein Beispiel für eine virtuelle Ansicht ImgV des Fahrzeuginnenraums aus der Vogelperspektive, wie sie durch das oben beschriebene Verfahren erhalten wird. Die Ansicht ImgV des Fahrzeuginnenraums wird beispielsweise aus acht in den Fahrzeuginnenraum gerichteten Kameras ermittelt, wie dies in Fig. 1 beschrieben ist. Durch Korrelation der Kamerabilder gemäß dem Prozess der Fig. 6 und der Fig. 7 wird ein Modell des Fahrzeuginnenraums erzeugt, das von einer virtuellen Kamera (CamV in Fig. 7) gemäß dem Prozess in Fig. 9 "abfotografiert" wird. Das aus den Kamerabildern konstruierte 3D-Modell umfasst Punkte, Flächen oder andere geometrische Formen, die zu Sitzen S1, S2, S3 und S4 im Fahrzeugraum zugehörig sind. Diese Sitze S1-S4 können durch Vergleich mit einem 3D-Referenzmodell des Fahrzeuginnenraums erkannt werden, auch wenn die Sitze S1-S4 durch Personen M1, M2, M3 oder andere Objekte im Fahrzeuginnenraum für einzelne Kameras teilweise oder vollständig verdeckt sind. Das aus den Kamerabildern konstruierte 3D-Modell umfasst ferner Punkte, Flächen oder andere geometrische Formen, die einen Tisch T beschreiben, sowie Punkte, Flächen oder andere geometrische Formen, die Personen M1, M2, M3 im Fahrzeuginnenraum beschreiben. Das virtuelle Abbild ImgV des 3D-Modells des Fahrzeuginnenraums zeigt dem Fahrer an, dass sich die Person M3 entgegen der Sicherheitserfordernisse während der Fahrt erhoben hat und sich folglich nicht angeschnallt auf seinem Sitz S1 befindet. Ferner zeigt das virtuelle Abbild ImgV des Fahrzeuginnenraums dem Fahrer an, dass sich auf dem Tisch T ein nicht befestigtes Objekt Obj befindet, das bei plötzlichen Bremsvorgängen unkontrolliert im Fahrzeuginnenraum herumfliegen könnte und damit eine Bedrohung für die Sicherheit der Personen M1, M2 und M3 im Fahrzeuginnenraum darstellt. Das Abbild ImgV des Fahrzeuginnenraums der Fig. 10 stellt ein mögliches Bild des Fahrzeuginnenraums von oben dar, wie es wegen der Perspektive von keiner realen Kamera (Cam1-8 in Fig. 1) alleine aufgenommen werden kann. Das errechnete Bild des Kamerasystems kann auf einem beliebigen Display oder auch innerhalb einer App auf einem Smartphone angezeigt werden.

In den oben angeführten Ausführungsbeispielen wurden Farbbild- oder Graubildkameras verwendet, um Aufnahmen des Fahrzeuginnenraums zu erlangen. Alternativ oder zusätzlich können auch Time-of-Flight Kameras oder Stereo-Kameras verwendet werden. Bei diesen Kameratypen gibt es zusätzlich eine Tiefeninformation des beobachteten Objekts, so dass die Erstellung des 3D-Modells des Innenraums zur Laufzeit des Systems einfacher und robuster möglich ist und keiner Merkmalspunkte bedarf. Einfache Graubild- oder Farbkameras sind jedoch typischerweise günstiger als Time-of-Flight oder Stereokameras.

### Bezugszeichen

1 Fahrzeug
2 Fahrzeuginnenraum
3 Recheneinheit
4 Display
5 Kommunikationssystem
Cam1-Cam8 Innenraumkamera
S1-S4 Sitze
S1std Referenzposition des ersten Sitzes
Dis Verschiebung des Sitzes
T Tisch
Img1-Img8 Kamerabilder
Mod3D 3D-Modell des Fahrzeuginnenraums
Mod3Da rekonstruiertes 3D-Modell des Fahrzeuginnenraums
Mod3Db vordefiniertes 3D-Modell des Fahrzeuginnenraums
Obj Objekt im Fahrzeuginnenraum
P1, P2 Pixel im Kamerabild
P1', P2' projizierte Pixel des Kamerabilds
P1", P2" virtuelle Abbilder der projizierten Pixel
P3D rekonstruierte dreidimensionale Position
OS1, OS2 Optische Strahlen bezüglich erster und zweiter Kamera
OS1', OS2' Optische Strahlen bezüglich virtueller Kamera
OSV Optischer Strahl bezüglich virtueller Kamera
CamV virtuelle Kamera
ImgV virtuelles Bild
Proj virtuelle Projektionsoberfläche
F1-F8 beispielhafte Flächen eines Fahrzeuginnenraummodells
F Fläche auf erstem Sitz
M1, M2, M3 Personen im Fahrzeuginnenraum

## Patentansprüche

1. Vorrichtung, umfassend eine Recheneinheit (3), die dazu ausgelegt ist, wenigstens ein Kamerabild (Img1-Img8) wenigstens einer Kamera (Cam1-Cam8) auf eine virtuelle Projektionsoberfläche (Proj) zu projizieren, um eine virtuelle Ansicht (ImgV) des Fahrzeuginnenraums (2) zu erstellen.

2. Vorrichtung nach Anspruch 1, wobei die Recheneinheit (3) dazu ausgelegt ist, ein virtuelles Abbild (ImgV) des auf die virtuelle Projektionsoberfläche (Proj) projizierten Kamerabildes zu erzeugen.

3. Vorrichtung nach Anspruch 1, wobei die Recheneinheit (3) dazu ausgelegt ist, mehrere Kamerabilder (Img1-Img8) von jeweiligen Kameras (Cam1-Cam8) auf die virtuelle Projektionsoberfläche (Proj) zu projizieren, um daraus eine zusammengesetzte virtuelle Ansicht (ImgV) des Fahrzeuginnenraums (2) zu erstellen.

4. Vorrichtung nach Anspruch 1, wobei die virtuelle Projektionsoberfläche (Proj) aus einem Modell (Mod3D) des Fahrzeuginnenraums abgeleitet ist.

5. Vorrichtung nach Anspruch 4, wobei das Modell (Mod3D) des Fahrzeuginnenraums ein vordefiniertes Referenzmodell (Mod3Db) des Fahrzeuginnenraums ist.

6. Vorrichtung nach Anspruch 4, wobei die Recheneinheit (3) dazu ausgelegt ist, das Modell (Mod3D) des Fahrzeuginnenraums mittels stereoskopischer Techniken aus aktuellen Kamerabildern (Img1-Img8) zu rekonstruieren.

7. Vorrichtung nach Anspruch 4, wobei die Recheneinheit (3) dazu ausgelegt ist, ein vordefiniertes Referenzmodell (Mod3Db) des Fahrzeuginnenraums mit einem mittels stereoskopischer Techniken aus aktuellen Kamerabildern erhalten Modell (Mod3Da) des Fahrzeuginnenraums zusammenzuführen.

8. Vorrichtung nach Anspruch 5 oder 6, wobei die Recheneinheit (3) dazu ausgelegt ist, gemeinsame Merkmale eines Objekts (Obj) in mehreren Kamerabildern (Img1, Img2) zu erkennen, um ein Modell des Fahrzeuginnenraums (2) zu rekonstruieren.

9. Überwachungssystem für einen Fahrzeuginnenraum (2), umfassend ein oder mehrere Kameras (Cam1-Cam8), sowie eine Vorrichtung gemäß einem der vorstehenden Ansprüche, die dazu ausgelegt ist, auf Grundlage ein oder mehrerer Kamerabilder (Img1-Img8) der Kameras (Cam1-Cam8) eine virtuelle Ansicht (ImgV) des Fahrzeuginnenraums (2) zu erstellen.

10. Verfahren, umfassend Projizieren wenigstens eines Kamerabildes (Img1-Img8) wenigstens einer Kamera (Cam1-Cam8) auf eine virtuelle Projektionsoberfläche (Proj), um eine virtuelle Ansicht (ImgV) des Fahrzeuginnenraums (2) zu erstellen.
